# EUROPÄISCHE PATENTSCHRIFT

(11) **EP 2 362 617 B1**
(45) Veröffentlichungstag und Bekanntmachung des Hinweises auf die Patenterteilung: **26.08.2015**
(21) Anmeldenummer: 11004269.4
(22) Anmeldetag: 02.06.2001
(51) Int. Cl.: H04M 1/725, B60R 11/02, H04M 1/60, F16K 17/04, F16K 27/02, F16K 15/04

(54) **Externe Bedieneinheit für ein Mobilfunktelefon**
External operating unit for a cellular phone
Unité de commande externe pour un téléphone mobile

(30) Priorität: 21.06.2000 DE 10030603
(43) Veröffentlichungstag der Anmeldung: 31.08.2011
(62) Teilanmeldung aus: 01113459.0
(73) Patentinhaber: Siemens Aktiengesellschaft, 80333 München (DE)
(72) Erfinder: Kabatek, Ulrich, Dr., 64832 Babenhausen (DE)

(56) Entgegenhaltungen:
- EP-A- 0 996 267
- WO-A1-94/24775
- WO-A1-99/30429
- WO-A1-99/66647
- DE-A1- 19 625 002
- US-A- 5 964 847

## Beschreibung

Die Erfindung betrifft eine Bedieneinheit für ein Mobilfunktelefon, wobei die Bedieneinheit getrennt von dem Mobilfunktelefon ausgebildet und mit dem Mobilfunktelefon verbindbar ist. Weiterhin betrifft die Erfindung ein Verfahren zur Aktualisierung von Befehlsfunktionen einer externen Bedieneinheit für den Betrieb eines Mobilfunktelefons.

Aus der nicht vorveröffentlichten Deutschen Patentanmeldung 99 21 533.2 der Anmelderin ist ein Kommunikationssystem eines Kraftfahrzeuges bekannt, das ein Mobilfunktelefon sowie ein in einem Kraftfahrzeug eingebautes Audio- und/oder Informationssystem beinhaltet. Das Mobilfunktelefon ist über die Bedieneinheit des Audio- und/oder Informationssystems bedienbar, sodass eine Freisprechfunktion realisierbar ist. Hierbei erfolgt eine Gesprächs- und/oder Datenübertragung zwischen dem Mobilfunktelefon und dem Audio- und/oder Informationssystem über eine drahtlose Verbindung.

Aus der Zeitschrift ADAC Motorwelt, Ausgabe März 1999 ist ein Telematik-Service-Kit bekannt, bei dem über ein Zusatzgerät, das mit einem Mobilfunktelefon verbindbar ist, über verschiedene Tasten eine Pannenhilfe angefordert, ein Notruf ausgesendet oder Verkehrsinformationen angefordert werden können. Dieses Zusatzgerät stellt somit ebenfalls eine externe Bedieneinheit für bestimmte Funktionen eines Mobilfunktelefons dar. Wie aus dieser Veröffentlichung zu entnehmen ist, kann das Zusatzgerät nur mit bestimmten Typen von Mobilfunktelefonen eingesetzt werden. Insbesondere tritt hierbei das Problem auf, dass ein Nutzer dieses Telematik-Service-Kit bei Anschaffung eines neuen Mobilfunktelefons die bereits vorhandene externe Bedieneinheit nicht weiterverwenden kann, da diese nur für den Betrieb mit festgelegten Typen von Mobilfunktelefonen ausgerüstet ist.

Das Dokument WO 99/66647 A1 offenbart einen sogenannten mobile telephone docking device, d.h. eine Einrichtung zur Aufnahme und zum Anschluß eines Mobilfunktelefons. Der mobile telephone docking device stellt eine externe Bedieneinheit zum Bedienen eines Mobilfunktelefons dar.

Das Dokument WO 99/30429 A1 offenbart eine Steuereinrichtung (control unit) in einem Kraftfahrzeug, über die ein Mobilfunktelefon gesteuert bzw. bedient werden kann. Das Mobilfunktelefon muss dazu an eine Basis-Station angedockt sein, wobei die Basis-Station über eine drahtlose Verbindung mit der Steuereinrichtung (control unit) kommunizieren kann.

Das Dokument US 5 964 847 A offenbart ein sogenanntes "mobile client system", das einen Tablet-Computer und ein Mobilfunktelefon derart kombiniert, dass der Tablet-Computer mithilfe des Mobilfunktelefon über das Mobilfunknetz mit einem Server kommunizieren kann. Der Tablet-Computer gemäß Dokument D4 stellt somit eine Bedieneinrichtung für das Mobiffunktelefon dar.

Das Dokument EP 0 996 267 A2 offenbart eine Schnittstelleneinrichtung zur Informationsübertragung zwischen Eingabe/Ausgabemitteln und Anwendungsgeräten in einem Informations- und/oder Kommunikationssystem bekannt. Die Schnittstelleneinrichtung ermöglicht es, dass Anwendungsgeräte mit verschiedensten Eingabe/Ausgabemitteln verwendet werden können, ohne dass Änderungen am Anwendungsgerät erforderlich wären. Die Schnittstelleneinrichtung greift dazu auf Eingabe/Ausgabeformate und -strukturen zurück, die in einer Speichereinrichtung abgespeichert sind.

Inzwischen werden Mobilfunktelefone angeboten, über die ein Internetzugang möglich ist. Der Nutzer hat somit die Möglichkeit, unabhängig von einer Telefonfestnetzleitung die Angebote des Internets zu durchsuchen und Informationen aus dem Internet über das Mobilfunktelefon herunterzuladen. Der Zugang zum Internet erfolgt nach dem WAP-Standard (WAP: Wireless Application Protocol). Bei WAP handelt es sich um den gemeinsamen Standard der Kommunikationsindustrie zur Übertragung speziell aufbereiteter Internetseiten auf Mobilfunktelefone. Zukünftige Mobilfunkgerätegenerationen können zudem nach dem neuen UMTS Standard arbeiten (UMTS: Universal Mobile Telecommunications System). Bei UMTS handelt es sich um einen Mobilfunkstandard, der eine Datenübertragung mit bis zu 200-facher Geschwindigkeit der herkömmlichen Netze ermöglicht.

Aus der vorstehenden Schilderung ist ersichtlich, dass die Weiterentwicklung von Mobilfunktelefonen auch in Zukunft in kurzen Abständen zu neuen Gerätegenerationen mit verändertem Funktionsumfang führen wird. Entsprechende moderne Mobilfunktelefone mit erweiterter Funktionalität können jedoch mit bestehenden externen Bedieneinheiten, wie sie insbesondere in Kraftfahrzeugen vorhanden sind, nicht kombiniert werden. Hier setzt nun die vorliegende Erfindung an, die es sich zur Aufgabe gemacht hat, ein Bediengerät anzugeben, das in einfacher Weise an die unterschiedliche Funktionalität verschiedener bekannter und zukünftiger Mobilfunktelefone anpassbar ist.

Die Aufgabe wird gelöst durch eine Bedieneinheit für ein Mobilfunktelefon gemäß Anspruch 1 und ein Verfahren zur Bedienung eines Mobilfunktelefons gemäß Anspruch 15.

Während bekannte Bedieneinheiten auf den Betrieb mit bestimmten Typen von Mobilfunktelefonen ausgelegt sind, wobei es sich naturgemäß bei den Mobilfunktelefonen nur um solche handeln kann, die zum Vertriebszeitpunkt der Bedieneinheit bereits auf dem Markt verfügbar waren, ist durch die erfindungsgemäße Bedieneinheit auch ein Betrieb mit zukünftigen Mobilfunktypen gewährleistet. In einem Speichermodul der Bedieneinheit ist ein erster Satz von standardisierten Funktionen für Mobilfunktelefone abgespeichert, der nur wenige Standardfunktionen umfasst. Hierzu gehören die Funktionen zum Aufbau einer festen Datenverbindung zu einem Mobilfunktelefon und zur Übermittlung eines Identitätsmerkmals des Mobilfunktelefons. Bei dem Identitätsmerkmal handelt es sich um ein Merkmal, das den Typ des angeschlossenen Mobilfunktelefons klar kennzeichnet. Dies kann beispielsweise die exakte Typenbezeichnung des Mobilfunktelefons oder auch eine Codenummer sein.

Wird nun ein neues Mobilfunktelefon an die Bedieneinheit angeschlossen, wird zunächst eine feste Datenverbindung zu dem Mobilfunktelefon aufgebaut und über die genannte Datenverbindung eine Modellbezeichnung des Mobilfunktelefons abgefragt. Anhand der Modellbezeichnung wird sodann geprüft, ob in dem Speichermodul der Bedieneinheit ein zweiter Satz von spezialisierten Funktionen des Mobilfunktelefons abgespeichert ist. Falls die genannte Prüfung ergibt, dass der zweite Satz in dem Speichermodul (4) abgespeichert ist, ist die Bedieneinheit für die Bedienung des Mobilfunktelefons bereit.
Falls die genannte Prüfung ergibt, dass der zweite Satz in dem Speichermodul (4) nicht abgespeichert ist, wird eine Bibliothek mit einem zweiten Satz der spezialisierten Funktionen des Mobilfunktelefons in die Bedieneinheit geladen und in dem Speichermodul der Bedieneinheit abgespeichert. Anschließend ist die Bedieneinheit für die Bedienung des Mobilfunktelefons bereit.

Insbesondere weist die Bedieneinheit ein Steuermodul mit einem allgemein als Browser bezeichneten Programm zum Zugriff auf Dateien eines allgemein zugänglichen externen Computersystems, insbesondere des Internet, über eine Funkverbindung des Mobilfunktelefons auf. Über einen solchen Browser kann dabei in bekannter Weise auf Dateien des Internet zugegriffen werden, wobei die Verbindung zu einem Internetprovider über eine Funkverbindung des Mobilfunktelefons erfolgt. Hierdurch ergibt sich in besonders einfacher Weise die Möglichkeit den zweiten Satz von spezialisierten Funktionen von einer externen Datenbank und hierbei insbesondere über das Internet mittels der Funkverbindung zu laden. Entsprechende Informationen über die spezialisierten Funktionen können dabei von den Mobilfunkherstellern im Internet für die Kunden bereitgehalten werden, wie dies auch bereits heute für andere Anwendungsprogramme wie beispielsweise Druckertreiber der Fall ist.

Prinzipiell ist es möglich, in das Mobilfunktelefon nur die wesentlichen Module für die Datenübertragung zu integrieren, jedoch handelt es sich vorzugsweise bei dem Mobilfunktelefon um ein ohne die externe Bedieneinheit betreibbares Mobilfunktelefon. Hierzu ist in das Mobilfunktelefon eine weitere Anzeige- und Bedieneinheit integriert. Insofern handelt es sich um ein bekanntes, handelsübliches Mobilfunktelefon. Die erfindungsgemäße Bedieneinheit für ein Mobilfunktelefon kann insbesondere fest in einem Kraftfahrzeug installiert sein und dabei auch als Freisprecheinrichtung dienen.

Die Bedieneinheit kann insbesondere als eigenständiges Gerät im Kraftfahrzeug eingebaut sein, insbesondere in einem Anzeigeinstrument des Fahrzeugs oder im Armaturenbrett. Darüber hinaus kann die erfindungsgemäße Bedieneinheit auch in eine sonstige Komponente des Kraftfahrzeugs integriert sein. Hierbei kann es sich insbesondere um ein Autoradio, ein Navigations- oder ein Multimediasystem handeln. Hierbei können Bedien- und Anzeigeelemente dieser Komponenten für die erfindungsgemäße Bedieneinheit mit genutzt werden, sodass sich ein Kostenvorteil ergibt.

Gemäß einer weiteren beispielhaften Ausgestaltung der Erfindung kann auch das Mobilfunktelefon fest in ein Kraftfahrzeug eingebaut sein, wobei die Bedieneinheit insbesondere eine mobile Bedieneinheit wie beispielsweise ein Notebook oder ein PDA (Personal Digital Assistent) sein kann.

Die Verbindung zwischen der Bedieneinheit und dem Mobilfunktelefon kann über eine drahtgebundene Verbindung erfolgen. Besonders bevorzugt wird jedoch eine drahtlose Verbindung zwischen der Bedieneinheit und dem Mobilfunktelefon, insbesondere eine drahtlose Kurzstreckenfunkverbindung wie sie in der eingangs erwähnten Deutschen Patentanmeldung 199 21 533.2 beschrieben ist, insbesondere nach dem Bluetooth- Standard. Bei dem in der Anzeigeeinheit vorzugsweise vorhanden Browser handelt es sich insbesondere um einen WAP-Browser. Hierdurch ist ein Internetzugang mittels der Bedieneinheit über den WAP-Standard möglich. Vorzugsweise verwendet der Browser die Protokolle bzw. Sprachen WML und WMLScript. Hierbei handelt es sich um standardisierte Protokolle bzw. Sprachen die analog zu den bei Internetfestnetzverbindungen vorhandenen Protokollen bzw. Sprachen HTML und Java-Script sind. Die Erfindung ist jedoch nicht auf die Verwendung eines WAP-Browsers beschränkt, sodass insbesondere auch zukünftige Standards eingesetzt werden können.

Bei den bereits erwähnten standardisierten Grundfunktionen, die fest in der Bedieneinheit abgespeichert sind, handelt es sich insbesondere um Funktionen, die Bestandteil des standardisierten AT+C Befehlssatzes sind.

Ein erfindungsgemäßes Verfahren zur Bedienung eines Mobilfunktelefons über eine externe Bedieneinheit, wobei in einem der Bedieneinheit zugeordneten Speichermodul ein erster Satz von standardisierten Funktionen, der die Funktionen zum Aufbau einer festen Datenverbindung und zur Übermittlung einer Modellbezeichnung des Mobilfunktelefons beinhaltet, abgespeichert ist, weist die folgenden Verfahrensschritte auf:
- Abfragen der Modellbezeichnung des Mobilfunktelefons durch ein Steuermodul der Bedieneinheit,
- Feststellen anhand der Modellbezeichnung, ob für das Mobilfunktelefon ein zweiter Satz von spezialisierten Funktionen des Mobilfunktelefons in der Bedieneinheit abgespeichert ist,
- Benutzen der Funktionen des genannten ersten und zweiten Satzes, um die Bedienung des Mobilfunktelefons zu ermöglichen, falls die genannte Prüfung ergibt, dass der zweite Satz in dem Speichermodul abgespeichert ist.

Falls für das Mobilfunktelefon kein zweiter Satz von spezialisierten Funktionen abgespeichert ist, werden gemäß einer Ausgestaltung der Erfindung in der Bedieneinheit folgende Verfahrensschritte durchgeführt:
- automatisches Herstellen einer Funkverbindung mittels des Mobilfunktelefons zu einer externen Datenbank,
- Anfordern des zweiten Satzes von spezialisierten Funktionen von der externen Datenbank anhand der Modellbezeichnung des Mobilfunktelefons,
- Empfangen des zweite Satzes von spezialisierten Funktionen von der externen Datenbank und Abspeichern desselben in dem der Bedieneinheit zugeordneten Speichermodul,
- Benutzen des genannten ersten und zweiten Satzes von Funktionen, um die Bedienung des Mobilfunktelefons zu ermöglichen.

Das Abspeichern des zweiten Satzes von spezialisierten Funktionen kann insbesondere dauerhaft sein. Alternativ kann der zweite Satz von spezialisierten Funktionen jedoch auch nur vorübergehend abgespeichert werden, sodass dieser oder Teile davon stets über die Mobilfunkverbindung aktuell geladen werden. Hierdurch ist eine regelmäßige Aktualisierung der spezialisierten Funktionen und damit des Funktionsumfangs des Mobilfunktelefons sichergestellt. Gegebenenfalls wird ein Verweis auf die stets aktuell zu ladenden Funktionen abgespeichert.

Die Erfindung wird nachfolgend anhand eines Ausführungsbeispiels und der Zeichnung näher erläutert. Es zeigen:
Fig. 1: ein Blockschaltbild der Bedieneinheit und des Mobilfunktelefons
Fig. 2: ein Ablaufdiagramm

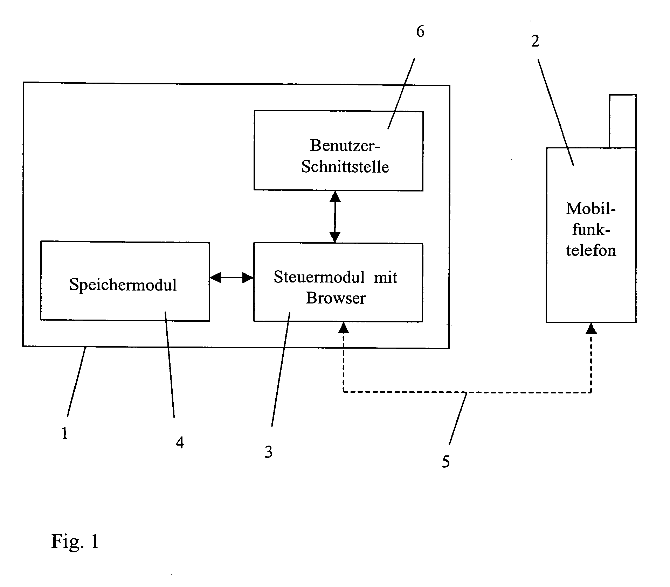

In Figur 1 ist ein Blockschaltbild der Bedieneinheit 1 dargestellt, die mit einem Mobilfunktelefon 2 verbunden ist. Die Bedieneinheit 1 beinhaltet ein Steuermodul 3 mit einem WAP-Browser. Der Browser verwendet in diesem Ausführungsbeispiel die Protokolle bzw. Sprachen WML und WMLskript. Der Browser ermöglicht mittels einer Mobilfunkverbindung über das Mobilfunktelefon 2 einen Zugang zum Internet und eine Datenübertragung vom und zum Internet. Hierzu wird in bekannter Weise eine Verbindung zur einem Internetprovider hergestellt.

Das Steuermodul 3 ist mit einem Speichermodul 4 verbunden. In dem Speichermodul 4 ist ein erster Satz von standardisierten Funktionen für Mobilfunktelefone abgelegt. Dieser erste Satz von standardisierten Funktionen ist Teil des sogenannten AT+C Befehlssatzes. Dieser Satz von standardisierten Funktionen enthält zumindest die Funktionen zum Aufbau einer festen Datenverbindung und zur Übermittlung eines Identitätsmerkmals des Mobilfunktelefons. Darüber hinaus sind in dem Speichermodul weitere spezialisierte Funktionen des Mobilfunktelefons 2 abgelegt. Über die Bedieneinheit 1 ist somit der volle Funktionsumfang des Mobilfunktelefons 2 nutzbar.

Das Steuermodul 3 ist ferner mit einer Benutzerschnittstelle 6 verbunden. Die Benutzerschnittstelle 6 beinhaltet eine Eingabeeinheit und eine Ausgabeeinheit. Bei der Eingabeeinheit kann es sich insbesondere um eine Tastatur handeln. Bei der Ausgabeeinheit handelt es sich insbesondere um eine optische Ausgabeeinheit. Die Eingabe- und Ausgabeeinheit können miteinander kombiniert sein, beispielsweise in Form eines berührungsempfindlichen Bildschirms (Touch-screen). Über die Benutzerschnittstelle 6 können somit in bekannter Weise Internetseiten unter Zuhilfenahme des Browsers im Steuermodul 3 und des Mobilfunktelefons 2 aufgerufen und Dateien aus dem Internet heruntergeladen werden.

Über die Verbindung 5 sind die Bedieneinheit 1 und das Mobilfunktelefon 2 miteinander verbunden. Bei der Verbindung 5 kann es sich sowohl um eine drahtgebundene als auch um eine drahtlose Verbindung handeln. Sofern es sich um eine drahtlose Verbindung handelt, wird insbesondere eine Kurzstreckenfunkverbindung zwischen der Bedieneinheit 1 und dem Mobilfunktelefon 2 bevorzugt, beispielsweise nach dem Bluetooth-Standard. In diesem Falle enthalten sowohl die Bedieneinheit 1 als auch das Mobilfunktelefon 2 entsprechende Sende- und Empfangseinrichtungen. Weiterhin kann die Verbindung zwischen der Bedieneinheit 1 und dem Mobilfunktelefon 2 auch durch eine optische Verbindung, insbesondere eine Infrarotverbindung, erfolgen. In diesem Falle sind entsprechende Infrarotsende- und -empfangsmodule in der Bedieneinheit 1 und im Mobilfunktelefon 2 vorzusehen. Die Bedieneinheit 1 kann insbesondere auch mehrere der genannten Verbindungsmöglichkeiten aufweisen, sodass sowohl eine drahtgebundene als auch eine drahtlose Verbindung zu entsprechenden Mobilfunktelefonen gewährleistet ist.

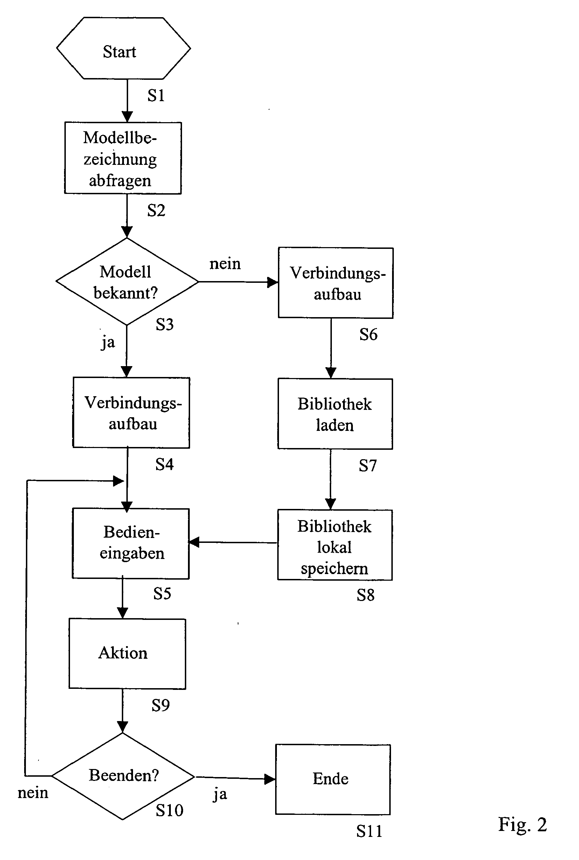

Wird nun ein neues Mobilfunktelefon mit der Bedieneinheit 1 verbunden, zu dem die spezialisierten Funktionen noch nicht in dem Speichermodul 4 der Bedieneinheit 1 abgespeichert sind, so werden die benötigten Bibliotheken mit einem zweiten Satz von spezialisierten Funktionen des Mobilfunktelefons aus dem Internet in das Speichermodul 4 geladen. Das hierbei ablaufenden Verfahren wird in seinen wesentlichen Schritten anhand der Figur 2 nachfolgend erläutert.

Nach dem Einschalten der Geräte in Schritt S1 wird in Schritt S2 zunächst die Modellbezeichnung des angeschlossenen Mobilfunkgerätes durch das Steuermodul 3 der Bedieneinheit 1 abgefragt. Hierbei kann es sich insbesondere um eine codierte Modellbezeichnung handeln. In Schritt S3 wird geprüft, ob es sich um ein bekanntes Modell handelt, d. h. ob im Speichermodul 4 eine Bibliothek mit spezialisierten Funktionen des angeschlossenen Mobilfunktelefons abgelegt ist. Ist dies der Fall, so kann in Schritt S4 direkt der Verbindungsaufbau erfolgen und in Schritt S5 können die Bedieneingaben durch den Benutzer vorgenommen werden. Die mit den Bedieneingaben verbundenen Aktionen werden in Schritt S9 ausgeführt. In Schritt S10 wird geprüft, ob die Verbindung beendet werden soll. Ist dies der Fall, so wird die Verbindung in Schritt S11 abgebrochen. Andernfalls können in Schritt S5 neue Bedieneingaben gemacht werden.

Ergibt sich dagegen in Schritt S3, dass zu dem Mobilfunktelefon keine Bibliothek von spezialisierten Funktionen im Speichermodul 4 abgelegt ist, so erfolgt in Schritt S6 zunächst ein Verbindungsaufbau des Mobilfunktelefons zu einem Internetprovider. Dieser Verbindungsaufbau ist möglich, da das Mobilfunktelefon zumindest einen ersten Satz von standardisierten Funktionen aufweist, der auch in dem Speichermodul 4 abgelegt ist. Bei diesen Funktionen handelt es sich um die Funktionen zum Aufbau einer festen Datenverbindung und zur Übermittlung eines Identitätsmerkmals des Mobilfunktelefons. Die letztgenannte Funktion wurde bereits in Schritt S2 zur Abfrage der Modellbezeichnung benötigt. Über die standardisierte Funktion zum Aufbau einer festen Datenverbindung erfolgt nunmehr in Schritt S6 der Zugang zu dem Internetprovider. In Schritt S7 wird schließlich eine Bibliothek mit einem zweiten Satz von spezialisierten Funktionen des Mobilfunktelefons vom Internet geladen. Der Schritt S7 umfasst mehrere Teilschritte, die insbesondere die Übermittlung des Identitätsmerkmals des Mobilfunktelefons, wie beispielsweise einer codierten Modellbezeichnung, an eine Internetdatenbank sowie einen Suchvorgang zum Aufsuchen der zu diesem Mobilfunktelefons gehörenden Bibliothek mit einem zweiten Satz von spezialisierten Funktionen des Mobilfunktelefons umfasst. Anschließend wird die ausgewählte Bibliothek an die Bedieneinheit 1 übermittelt. In Schritt S8 wird die so geladene Bibliothek in dem Speichermodul 4 der Bedieneinheit 1 abgespeichert. Das Speichermodul 4 enthält dazu entsprechende beschreibbare Speicherelemente. Anschließend können in Schritt S5 in bekannter Weise die üblichen Bedieneingaben gemacht werden. Nach diesem Prozess befinden sich die spezialisierten Funktionen dieses Mobilfunktelefons nunmehr in der Bedieneinheit 1, sodass der beschriebene Vorgang des Ladens der Bibliothek nur beim erstmaligen Anschließen eines neuen Mobilfunktyps an die Bedieneinheit 1 erforderlich ist.

Mit der erfindungsgemäßen Bedieneinheit bzw. dem erfindungsgemäßen Verfahren ist somit die Möglichkeit eröffnet, eine vorhandene Bedieneinheit, insbesondere eine in einem Fahrzeug angeordnete Bedieneinheit für Mobilfunktelefone, auch mit neu auf den Markt kommenden Mobilfunktelefonen mit neuen spezialisierten Funktionen zu nutzen.

## Patentansprüche

1. Bedieneinheit für ein Mobilfunktelefon, wobei
- die Bedieneinheit (1) getrennt von dem Mobilfunktelefon (2) ausgebildet und mit dem Mobilfunktelefon (2) verbindbar ist, und wobei
- die Bedieneinheit (1) ein Speichermodul (4) umfasst, in dem ein erster Satz von standardisierten Funktionen für Mobilfunktelefone abgespeichert ist, der die Funktionen zum Aufbau einer festen Datenverbindung zum Mobilfunktelefon (2) und zur Übermittlung einer Modellbezeichnung des Mobilfunktelefons (2) beinhaltet,
**dadurch gekennzeichnet, dass** die Bedieneinheit derart ausgebildet ist,
a) Funktionen des genannten ersten Satzes zu benutzen, um eine feste Datenverbindung zu dem Mobilfunktelefon (2) aufzubauen und über die genannte Datenverbindung eine Modellbezeichnung des Mobilfunktelefons (2) abzufragen,
b) anhand der Modellbezeichnung zu prüfen, ob in dem Speichermodul (4) ein zweiter Satz von spezialisierten Funktionen des Mobilfunktelefons (2) abgespeichert ist,
c) den genannten ersten und zweiten Satz von Funktionen zu benutzen, um die Bedienung des Mobilfunktelefons (2) zu ermöglichen, falls die genannte Prüfung ergibt, dass der zweite Satz in dem Speichermodul (4) abgespeichert ist.

2. Bedieneinheit nach Anspruch 1, **dadurch gekennzeichnet, dass** in die Bedieneinheit (1) ein Steuermodul (3) mit einem Programm (Browser) zum Zugriff
auf Dateien eines allgemein zugänglichen externen Computersystems, insbesondere des Internet,
über eine Funkverbindung des Mobilfunktelefons (2) integriert ist.

3. Bedieneinheit nach Anspruch 1 oder 2, **dadurch gekennzeichnet, dass** der zweite Satz von spezialisierten Funktionen von einer externen Datenbank, insbesondere über das Internet, mittels der Funkverbindung ladbar ist.

4. Bedieneinheit nach einem der vorhergehenden Ansprüche, **dadurch gekennzeichnet, dass** in das Mobilfunktelefon (2) eine weitere Bedieneinheit integriert ist.

5. Bedieneinheit nach einem der vorhergehenden Ansprüche 2 bis 4, **dadurch gekennzeichnet, dass** der in der Bedieneinheit (1) vorhandene Browser als WAP-Browser ausgebildet ist.

6. Bedieneinheit nach Anspruch 5, **dadurch gekennzeichnet, dass** der Browser die Standards WML und/oder WMLscript verwendet.

7. Bedieneinheit nach einem der vorhergehenden Ansprüche, **dadurch gekennzeichnet, dass** die standardisierten Funktionen Bestandteil des standardisierten AT+C Befehlssatzes sind.

8. Bedieneinheit nach einem der vorhergehenden Absprüche, **dadurch gekennzeichnet, dass** die Bedieneinheit (1) als eigenständiges Gerät in ein Anzeigeinstrument eines Fahrzeugs oder im Armaturenbrett eines Fahrzeugs eingebaut ist.

9. Bedieneinheit nach einem der vorhergehenden Ansprüche, **dadurch gekennzeichnet, dass** die Bedieneinheit (1) in ein Autoradio integriert ist.

10. Bedieneinheit nach einem der vorhergehenden Ansprüche, **dadurch gekennzeichnet, dass** die Bedieneinheit (1) in ein Navigations- oder ein Multimediasystem integriert ist.

11. Bedieneinheit nach einem der vorhergehenden Ansprüche, **dadurch gekennzeichnet, dass** die Bedieneinheit (1) mit dem Mobilfunktelefon (2) über eine drahtgebundene Verbindung verbindbar ist.

12. Bedieneinheit nach einem der vorhergehenden Absprüche, **dadurch gekennzeichnet, dass** die Bedieneinheit (1) mit dem Mobilfunktelefon (2) über eine drahtlose Verbindung verbindbar ist.

13. Bedieneinheit nach Anspruch 12, **dadurch gekennzeichnet, dass** die Verbindung zwischen der Bedieneinheit (1) und dem Mobilfunktelefon (2) über eine Kurzstreckenfunkverbindung erfolgt.

14. Bedieneinheit nach Anspruch 13, **dadurch gekennzeichnet, dass** die Kurzstreckenfunkverbindung nach dem Bluetooth-Standard erfolgt.

15. Verfahren zur Bedienung eines Mobilfunktelefons über eine externe Bedieneinheit, wobei in einem der Bedieneinheit zugeordneten Speichermodul ein erster Satz von standardisierten Funktionen, der die Funktionen zum Aufbau einer festen Datenverbindung zu einem Mobilfunktelefon und zur Übermittlung einer Modellbezeichnung des Mobilfunktelefons beinhaltet, abgespeichert ist,
**dadurch gekennzeichnet, dass**
durch die Bedieneinheit folgende Verfahrensschritte durchgeführt werden:
- Benutzen mindestens einer Funktion des genannten ersten Satzes, um eine feste Datenverbindung zu dem Mobilfunktelefon (2) aufzubauen,
- Benutzen mindestens einer Funktion des genannten ersten Satzes, um die Modellbezeichnung des Mobilfunktelefons abzufragen,
- Prüfen, anhand der Modellbezeichnung, ob für das Mobilfunktelefon ein zweiter Satz von spezialisierten Funktionen des Mobilfunktelefons in der Bedieneinheit abgespeichert ist,
- Benutzen der Funktionen des genannten ersten und zweiten Satzes, um die Bedienung des Mobilfunktelefons (2) zu ermöglichen, falls die genannte Prüfung ergibt, dass der zweite Satz in dem Speichermodul (4) abgespeichert ist.

16. Verfahren nach Anspruch 15, **dadurch gekennzeichnet, dass** die Bedieneinheit folgende Verfahrensschritte durchgeführt, falls für das Mobilfunktelefon kein zweiter Satz von spezialisierten Funktionen abgespeichert ist:
- automatisches Herstellen einer Funkverbindung über das Mobilfunktelefon zu einer externen Datenbank,
- Abfragen eines zweiten Satzes von spezialisierten Funktionen von der externen Datenbank anhand der Modellbezeichnung,
- Empfangen des zweiten Satzes von spezialisierten Funktionen,
- Abspeichern des zweiten Satzes von spezialisierten Funktionen in dem Speichermodul der Bedieneinheit,
- Benutzen der Funktionen des genannten ersten und zweiten Satzes, um die Bedienung des Mobilfunktelefons (2) zu ermöglichen.

17. Verfahren nach Anspruch 16, **dadurch gekennzeichnet, dass** die Verbindung zum Internet über ein in einem Steuermodul der Bedieneinheit lauffähiges Programm (Browser) zum Zugriff auf Internet-Dateien erfolgt.

18. Verfahren nach Anspruch 17, **dadurch gekennzeichnet, dass** die Verbindung zum Internet über einen WAP-Browser erfolgt.

19. Verfahren nach Anspruch 18, **dadurch gekennzeichnet, dass** der Browser die Standards WMLund WMLscript verwendet.

20. Verfahren nach einem der vorhergehenden Ansprüche, **dadurch gekennzeichnet, dass** die standardisierten Funktionen Bestandteil des AT+C Befehlssatzes sind.

21. Verfahren nach einem der vorhergehenden Absprüche, **dadurch gekennzeichnet, dass** eine drahtgebundene Verbindung zwischen der Bedieneinheit und dem Mobilfunktelefon erfolgt.

22. Verfahren nach einem der vorhergehenden Ansprüche, **dadurch gekennzeichnet, dass** eine Kurzstreckenfunkverbindung zwischen der Bedieneinheit und dem Mobilfunktelefon, insbesondere nach dem Bluetooth-Standard, erfolgt.

23. Bedieneinheit nach Anspruch 1, **dadurch gekennzeichnet, dass** sie derart ausgebildet ist,
- eine Funkverbindung mittels des Mobilfunktelefons zu einer externen Datenbank herzustellen, falls die genannte Prüfung ergibt, dass der zweite Satz in dem Speichermodul (4) nicht abgespeichert ist,
- anhand der Modellbezeichnung des Mobilfunktelefons den zweiten Satzes von spezialisierten Funktionen von der externen Datenbank anzufordern,
- den zweiten Satz von spezialisierten Funktionen von der externen Datenbank zu empfanden und in dem ihr zugeordneten Speichermodul abzuspeichern,
- den genannten ersten und zweiten Satz von Funktionen zu benutzen, um die Bedienung des Mobilfunktelefons (2) zu ermöglichen.

## Claims

1. Operating unit for a mobile radio telephone, wherein
- the operating unit (1) is constructed separately from the mobile radio telephone (2) and can be connected to the mobile radio telephone (2),
and wherein
- the operating unit (1) comprises a memory module (4) which stores a first set of standardized functions for mobile radio telephones which contains the functions for setting up a fixed data link to the mobile radio telephone (2) and for transmitting a model name of the mobile radio telephone (2), **characterized in that** the operating unit is designed
a) to use functions in said first set to set up a fixed data link to the mobile radio telephone (2) and to query a model name of the mobile radio telephone (2) via said data link,
b) to use the model name to check whether a second set of specialized functions of the mobile radio telephone (2) is stored in the memory module (4),
c) to use said first and second sets of functions to make it possible to operate the mobile radio telephone (2) if said check reveals that the second set is stored in the memory module (4).

2. Operating unit according to Claim 1, **characterized in that** a control module (3) containing a program (browser) for accessing files of a generally accessible external computer system, especially the Internet, is integrated in the operating unit (1) via a radio link of the mobile radio telephone (2).

3. Operating unit according to Claim 1 or 2, **characterized in that** the second set of specialized functions can be loaded by means of the radio link from an external database, especially via the Internet.

4. Operating unit according to one of the preceding claims, **characterized in that** a further operating unit is integrated into the mobile radio telephone (2).

5. Operating unit according to one of the preceding Claims 2 to 4, **characterized in that** the browser existing in the operating unit (1) is designed as WAP browser.

6. Operating unit according to Claim 5, **characterized in that** the browser uses the WML and/or WMLscript standards.

7. Operating unit according to one of the preceding claims, **characterized in that** the standardized functions are a component of the standardized AT+C instruction set.

8. Operating unit according to one of the preceding claims, **characterized in that** the operating unit (1) is installed as a separate device into an indicating instrument of the vehicle or in the dashboard of a vehicle.

9. Operating unit according to one of the preceding claims, **characterized in that** the operating unit (1) is integrated into a car radio.

10. Operating unit according to one of the preceding claims, **characterized in that** the operating unit (1) is integrated into a navigation system or a multimedia system.

11. Operating unit according to one of the preceding claims, **characterized in that** the operating unit (1) can be connected to the mobile radio telephone (2) via a wire-connected link.

12. Operating unit according to one of the preceding claims, **characterized in that** the operating unit (1) can be connected to the mobile radio telephone (2) via a wireless link.

13. Operating unit according to Claim 12, **characterized in that** the connection between the operating unit (1) and the mobile radio telephone (2) is effected by a short-distance radio link.

14. Operating unit according to Claim 13, **characterized in that** the short-distance radio link is effected in accordance with the Bluetooth standard.

15. Method for operating a mobile radio telephone via an external operating unit, a memory module assigned to the operating unit storing a first set of standardized functions which contains the functions for setting up a fixed data link to a mobile radio telephone and for transmitting a model name of the mobile radio telephone,
**characterized in that**
the following method steps are carried out by the operating unit:
- at least one function in said first set is used to set up a fixed data link to the mobile radio telephone (2),
- at least one function in said first set is used to query the model name of the mobile radio telephone,
- the model name is used to check whether a second set of specialized functions of the mobile radio telephone is stored in the operating unit for the mobile radio telephone,
- the functions in said first and second sets are used to make it possible to operate the mobile radio telephone (2) if said check reveals that the second set is stored in the memory module (4).

16. Method according to Claim 15, **characterized in that** the operating unit carries out the following method steps if a second set of specialized functions is not stored for the mobile radio telephone:
- a radio link to an external database is automatically established by means of the mobile radio telephone,
- a second set of specialized functions is requested from the external database using the model name,
- the second set of specialized functions is received,
- the second set of specialized functions is stored in the memory module of the operating unit,
- the functions in said first and second sets are used to make it possible to operate the mobile radio telephone (2).

17. Method according to Claim 16, **characterized in that** the connection to the Internet is effected via a program (browser), which is executable in a control module of the operating unit, for accessing Internet files.

18. Method according to Claim 17, **characterized in that** the connection to the Internet is effected via a WAP browser.

19. Method according to Claim 18, **characterized in that** the browser uses the WML and WMLscript standards.

20. Method according to one of the preceding claims, **characterized in that** the standardized functions are part of the AT+C instruction set.

21. Method according to one of the preceding claims, **characterized in that** a wire-connected link is effected between the operating unit and the mobile radio telephone.

22. Method according to one of the preceding claims, **characterized in that** a short-distance radio link is effected between the operating unit and the mobile radio telephone, especially in accordance with the Bluetooth standard.

23. Operating unit according to Claim 1, **characterized in that** it is designed
- to establish a radio link to an external database by means of the mobile radio telephone if said check reveals that the second set is not stored in the memory module (4),
- to use the model name of the mobile radio telephone to request the second set of specialized functions from the external database,
- to receive the second set of specialized functions from the external database and to store it in the memory module assigned to the operating unit,
- to use said first and second sets of functions to make it possible to operate the mobile radio telephone (2).

## Revendications

1. Unité de commande pour un téléphone radio mobile,
- l'unité de commande (1) étant réalisée séparément du téléphone radio mobile (2) et pouvant être reliée au téléphone radio mobile (2) et
- l'unité de commande (1) comprenant un module de mémoire (4) dans lequel est stocké un premier jeu de fonctions standardisées pour téléphones radio mobiles, lequel jeu contient les fonctions servant à établir une liaison de données fixe vers le téléphone radio mobile (2) et à transmettre une désignation de modèle du téléphone radio mobile (2),
**caractérisée en ce que** l'unité de commande est réalisée de manière à
a) utiliser des fonctions dudit premier jeu pour établir une liaison de données fixe vers le téléphone radio mobile (2) et s'enquérir d'une désignation de modèle du téléphone radio mobile (2) via ladite liaison de données ;
b) vérifier, à l'aide de la désignation de modèle, si un deuxième jeu de fonctions spécialisées du téléphone radio mobile (2) est stocké dans le module de mémoire (4) ;
c) utiliser lesdits premier et deuxième jeux de fonctions pour permettre la commande du téléphone radio mobile (2) s'il ressort de ladite vérification que le deuxième jeu est stocké dans le module de mémoire (4).

2. Unité de commande selon la revendication 1, **caractérisée en ce qu'**est intégré à l'unité de commande (1) un module de commande (3) avec un programme (Browser) pour accéder à des fichiers d'un système informatique externe généralement accessible, en particulier de l'internet, via une liaison radio du téléphone radio mobile (2).

3. Unité de commande selon la revendication 1 ou 2, **caractérisée en ce que** le deuxième jeu de fonctions spécialisées peut être chargé au moyen de la liaison radio à partir d'une base de données externe, en particulier via l'internet.

4. Unité de commande selon l'une des revendications précédentes, **caractérisée en ce qu'**une autre unité de commande est intégrée au téléphone radio mobile (2).

5. Unité de commande selon l'une des revendications précédentes 2 à 4, **caractérisée en ce que** le browser présent dans l'unité de commande (1) se présente sous la forme d'un WAP-Browser.

6. Unité de commande selon la revendication 5, **caractérisée en ce que** le browser utilise les normes WML et/ou WMLscript.

7. Unité de commande selon l'une des revendications précédentes, **caractérisée en ce que** les fonctions standardisées font partie du jeu de commandes standardisé AT+C.

8. Unité de commande selon l'une des revendications précédentes, **caractérisée en ce que** l'unité de commande (1) est montée en tant qu'appareil autonome dans un instrument d'affichage d'un véhicule automobile ou dans le tableau de bord d'un véhicule automobile.

9. Unité de commande selon l'une des revendications précédentes, **caractérisée en ce que** l'unité de commande (1) est intégrée à une autoradio.

10. Unité de commande selon l'une des revendications précédentes, **caractérisée en ce que** l'unité de commande (1) est intégrée à un système de navigation ou à un système multimédia.

11. Unité de commande selon l'une des revendications précédentes, **caractérisée en ce que** l'unité de commande (1) peut être reliée au téléphone radio mobile (2) via une liaison filaire.

12. Unité de commande selon l'une des revendications précédentes, **caractérisée en ce que** l'unité de commande (1) peut être reliée au téléphone radio mobile (2) via une liaison sans fil.

13. Unité de commande selon la revendication 12, **caractérisée en ce que** la liaison entre l'unité de commande (1) et le téléphone radio mobile (2) se produit via une liaison radio courte distance.

14. Unité de commande selon la revendication 13, **caractérisée en ce que** la liaison radio courte distance se produit selon la norme Bluetooth.

15. Procédé de commande d'un téléphone radio mobile via une unité de commande externe, un premier jeu de fonctions standardisées qui contient les fonctions servant à établir une liaison de données fixe vers un téléphone radio mobile et à transmettre une désignation de modèle du téléphone radio mobile étant stocké dans un module de mémoire associé à l'unité de commande, **caractérisé en ce que** l'unité de commande exécute les étapes suivantes :
- utiliser au moins une fonction dudit premier jeu pour établir une liaison de données fixe vers le téléphone radio mobile (2) ;
- utiliser au moins une fonction dudit premier jeu pour s'enquérir de la désignation de modèle du téléphone radio mobile ;
- vérifier, à l'aide de la désignation de modèle, si, pour le téléphone radio mobile, un deuxième jeu de fonctions spécialisées du téléphone radio mobile est stocké dans l'unité de commande ;
- utiliser les fonctions desdits premier et deuxième jeux pour permettre la commande du téléphone radio mobile (2) s'il ressort de ladite vérification que le deuxième jeu est stocké dans le module de mémoire (4).

16. Procédé selon la revendication 15, **caractérisé en ce que** l'unité de commande exécute les étapes suivantes s'il n'y a pas de deuxième jeu de fonctions spécialisées stocké pour le téléphone radio mobile :
- établissement automatique d'une liaison radio via le téléphone radio mobile vers une base de données externe ;
- interrogation d'un deuxième jeu de fonctions spécialisées de la base de données externe à l'aide de la désignation de modèle ;
- réception du deuxième jeu de fonctions spécialisées ;
- stockage du deuxième jeu de fonctions spécialisées dans le module de mémoire de l'unité de commande ;
- utilisation des fonctions desdits premier et deuxième jeux pour permettre la commande du téléphone radio mobile (2).

17. Procédé selon la revendication 16, **caractérisé en ce que** la liaison vers l'internet se produit via un programme (Browser) apte à tourner dans un module de commande de l'unité de commande pour accéder à des fichiers internet.

18. Procédé selon la revendication 17, **caractérisé en ce que** la liaison vers l'internet se produit via un WAP-Browser.

19. Procédé selon la revendication 18, **caractérisé en ce que** le browser utilise les normes WML et WMLscript.

20. Procédé selon l'une des revendications précédentes, **caractérisé en ce que** les fonctions standardisées font partie du jeu de commandes AT+C.

21. Procédé selon l'une des revendications précédentes, **caractérisé en ce qu'**il se produit une liaison filaire entre l'unité de commande et le téléphone radio mobile.

22. Procédé selon l'une des revendications précédentes, **caractérisé en ce qu'**il se produit une liaison radio courte distance entre l'unité de commande et le téléphone radio mobile, en particulier selon la norme Bluetooth.

23. Unité de commande selon la revendication 1, **caractérisée en ce qu'**elle est réalisée pour :
- établir une liaison radio au moyen du téléphone radio mobile vers une base de données externe s'il ressort de ladite vérification que le deuxième jeu n'est pas stocké dans le module de mémoire (4) ;
- à l'aide de la désignation de modèle du téléphone radio mobile, demander le deuxième jeu de fonctions spécialisées à la base de données externe ;
- recevoir le deuxième jeu de fonctions spécialisées de la base de données externe et le stocker dans le module de mémoire qui lui est associé ;
- utiliser lesdits premier et deuxième jeux de fonctions pour permettre la commande du téléphone radio mobile (2).
